# EUROPÄISCHE PATENTANMELDUNG

(11) **EP 2 223 853 A1**
(43) Veröffentlichungstag der Anmeldung: **01.09.2010**
(21) Anmeldenummer: 09153636.7
(22) Anmeldetag: 25.02.2009
(51) Int. Cl.: B64C 23/06

(54) **Strömungsdynamische Fläche mit einer von einer durch die angeströmte Fläche induzierten Strömung angetriebenen Turbine**

(71) Anmelder: Deutsches Zentrum für Luft- und Raumfahrt e.V., 51147 Köln (DE)
(72) Erfinder: Schülein, Dr. Erich, 37127, Scheden (DE)
(74) Vertreter: Rehberg Hüppe + Partner

(57) **Zusammenfassung**

Bei einer strömungsdynamische Fläche (2) mit einer einer Anströmung (23) der Fläche (2) zugewandten Vorderkante (29), einer der Anströmung (23) abgewandten Hinterkante (30) und einer freien Spitze (3) sowie einer an der freien Spitze (3) angeordneten und von einem von der angeströmten Fläche (2) induzierten Strömung angetriebenen Turbine (6) geht von der freien Spitze (3) der angeströmten Fläche (2) ein Randwirbel (4) aus und die Turbine (6) treibt einen vor deren Hinterkante (30) an der freien Spitze (3) angeordneten Propeller (9) in zu dem Randwirbel (4) entgegen gesetzter Drehrichtung (10) an.

## Beschreibung

### TECHNISCHES GEBIET DER ERFINDUNG

Die Erfindung bezieht sich auf eine strömungsdynamische Fläche mit den Merkmalen des Oberbegriffs des unabhängigen Patentanspruchs 1.

Die vorliegende Erfindung ist überall dort anwendbar, wo sich an der freien Spitze einer strömungsdynamischen Fläche, d. h. einer quer zu ihrer Anströmung frei endenden, schräg angeströmten und dadurch einen Auf-, Ab- und/oder Quertrieb erzeugenden Fläche, ein Randwirbel ausbildet, der mit negativen Auswirkungen z. B. auf den induzierten Widerstand verbunden ist. Zu diesen Anwendungsgebieten zählen insbesondere Trag-, Leit- und Ruderflächen von Fluggeräten und Wasserfahrzeugen sowie offene, d. h. nicht eingefasste Rotoren von Drehflüglern, Windkraftanlagen, Antriebspropellern und Ventilatoren jeglicher Art.

### STAND DER TECHNIK

Es ist allgemein bekannt, dass z. B. an den Tragflächen von Fluggeräten durch die Umströmung der Spitzen der Tragflächen von der Überdruck- zur Unterdruckseite Randwirbel entstehen. Dieses Phänomen ist nicht nur für direkte Verluste im Auftrieb, sondern auch für den induzierten Widerstand des jeweiligen Fluggeräts verantwortlich. Der induzierte Widerstand ist Ausdruck der Energieverluste durch die kinetische Energie der im Wirbel mitgerissenen Luftmassen. Das gesamte Wirbelsystem im Nachlauf eines Fluggeräts wird auch als Wirbelschleppe bezeichnet. Eine Wirbelschleppe führt nicht nur zu einem erhöhten Energieverbrauch, sondern birgt auch Sicherheitsrisiken. Insbesondere beim Start und im Landeanflug muss ein Mindestabstand zwischen Flugzeugen eingehalten werden, um sicherzustellen, dass die großskaligen Wirbelsysteme zerfallen sind und keine Gefahr für nachfolgende Flugzeuge mehr darstellt. Es ist bekannt, dass der induzierte Widerstand bei kleiner werdenden Fluggeschwindigkeiten und bei zunehmenden Winkeln von Tragflächen zunimmt. Da bei Start und Landung der Anstellwinkel der Tragflächen eines Flugzeugs durch die Landeklappen erhöht und die Geschwindigkeit niedrig ist, ist der induzierte Luftwiderstand in diesen Situationen am höchsten. Besonders groß ist die Wirbelstärke der Randwirbel bei großen (schweren) Verkehrsflugzeugen, die entsprechend besonders große Abstände nachfolgender Flugzeuge in der Start- und Landephase erfordern.

Eine Vielzahl von Maßnahmen und Vorrichtungen zur Beeinflussung von Randwirbeln wurde bereits vorgeschlagen und entwickelt. Die bekannteste Maßnahme ist eine Erhöhnung der Spannweite von Tragflächen sowie eine Verjüngung der Profiltiefe der Tragflächen zur Spitze hin. Effektiv wirken auch sogenannte Winglets, die an den Spitzen von Tragflächen angebracht werden. Diese Maßnahmen sind z. B. bei modernen Verkehrsflugzeugen fest etabliert.

Daneben gibt es komplexere Lösungen, zu denen z. B. ein angetriebener Propeller vor der Spitze einer Tragfläche gehört, der gegensinnig zu dem an der Spitze auftretenden Randwirbel rotiert. Die auf diese Weise erzielte Unterdrückung des Randwirbels führt zu einer effektiv höheren Tragflächenstreckung und somit zu einem niedrigeren induzierten Widerstand. Der Schub des Propellers wird bei dieser aus Snyder M. H. und Zumwalt G. W.: "Effects of Wingtip-Mounted Propellers on Wing Lift and Induced Drag", Journal of Aircraft, Vol. 6. No. 5, 1969, S. 392 bis 397 bekannten Lösung zusätzlich für die Fortbewegung des Flugzeugs genutzt. In der Summe ergibt sich bei gegebener Tragflächengeometrie eine deutliche Erhöhung des Auftriebs und Reduzierung des Widerstands. Dies entspricht einer Erhöhung der Gleitzahl des Fluggeräts, unter der hier das Verhältnis des Auftriebs zum gesamten Widerstand bezeichnet wird.

Aus dem US-Patent 2,485,218 ist es zur Unterdrückung von Randwirbeln bekannt, einen an der Spitze von Tragflächen angebrachten und um die eigene Achse gegen die Richtung des Randwirbels rotierenden Körper vorzusehen. Durch das Haften der Strömung an diesem rotierenden Körper, soll die Bildung des Randwirbels unterdrückt werden. Die Rotation des Körpers wird mechanisch oder von der Anströmung mittels eines Impellers angetrieben. Im letzteren Fall wird der Impeller auf der Rotationsachse des Körpers vor der Tragfläche angebracht und durch seine Anströmung in Rotation versetzt.

Das US-Patent 3,997,132 schlägt ein Turbofan-Triebwerk vor, das unmittelbar an der Spitze einer Tragfläche eines Verkehrsflugzeugs angebracht werden soll. Dabei sind mehrere Leitflächen radial im Nebenstromkanal dieses Triebwerks angeordnet, um den austretenden Kaltgasstrahl zur Rotation anzuregen. Diese Strömung ist zur Unterseite der Tragfläche gerichtet und soll die Unterdrückung des Randwirbels bewirken. Der Ablenkwinkel der Leitflächen kann variabel sein. Der erzeugte direkte Triebwerks-Heißgasstrahl wird für den Antrieb des Flugzeugs genutzt.

In der US 4,045,144 ist eine Windkraftanlage beschrieben, die eine stationär aufgebaute Tragfläche mit einem möglichst hohen induzierten Widerstand nutzt. Mit Hilfe einer Hochgeschwindigkeitsturbine, die auf der Randwirbelachse montiert und an einen Generator angeschlossen ist, wird die Rotationsenergie und somit die konzentrierte Windenergie in elektrische Energie umgewandelt. Eine weitere Ausführungsform dieser Windkraftanlage umfasst die Anordnung der Turbine in einem Luftkanal, der den Nasenbereich der Tragfläche mit einem Niederdruckbereich im Kern des Randwirbels verbindet. Der entstehende Sog induziert sehr hohe Strömungsgeschwindigkeiten, die zum effektiven Antrieb einer kleinen Hochgeschwindigkeits-Turbine notwendig sind.

Die US 4,917,332 und die US 5,150,859 beschreiben unabhängig voneinander eine Flugzeugtragfläche mit den Merkmalen des Oberbegriffs des unabhängigen Patentanspruchs 1, bei der eine Randwirbel-Turbine in direktem Nachlauf der Spitze der Tragfläche angebracht ist. Die Turbinenschaufeln sind so an einem Zentralkörper angeordnet, dass praktisch pure Rotationsenergie des Randwirbels zum Antrieb der Turbine genutzt wird. Die Turbinenwelle ist an einen Generator angeschlossen, so dass im Flug gewonnene Energie zur Versorgung der Flugzeugsysteme benutzt werden kann. So wird die an sich bereits in den Randwirbel verlorene Energie teilweise doch noch nutzbar gemacht.

Die US 5,100,085 beschreibt eine modifizierte Randwirbel-Turbine im Nachlauf der Spitze einer Tragfläche, bei der die Spannweite der Turbinenschaufeln deutlich über dem Radius des Randwirbels liegt, wobei die Verdrehung der Turbinenschaufeln zur Rotationsachse im Innenund Außenbereich entgegengesetzt ist. Innerhalb des Randwirbels treiben die Turbinenschaufeln die Turbine an, und außerhalb des Randwirbels wirken sie als Propellerblätter, um die Wirbelrotation zu hemmen und einen zusätzlichen Schub zu erzielen. Dieser zusätzliche Schub ist Ausdruck für den Rückgewinn der Energieverluste durch den Induzieren Widerstand.

Die US 5,918,835 schlägt einen Wirbelgenerator in Form eines Impellers vor, der hinter einer Tragfläche positioniert ist und vom Randwirbel an der Spitze der Tragfläche angetrieben wird. Die Rotationsachse des Impellers ist seitlich zur Spitze der Tragfläche parallel zur Wirbelachse an den Außenrand des Randwirbels versetzt, so dass zu jedem Zeitpunkt nur ein Teil des Impellers in den Randwirbel eintaucht. Durch die dem Impeller auf diese Weise vermittelte Rotation mit wird ein zweiter, gegenläufig rotierender Wirbel erzeugt, der ein günstigeres Strömungsfeld im Nachlauf induziert und somit zur Reduzierung des Luftwiderstands beiträgt. Zusätzlich kann die Rotationsenergie des Impellers zum Antrieb eines Bordgenerators genutzt werden.

Die Möglichkeiten der Einflussnahme auf den induzierten Widerstand mit optimierten spitzen Tragflächenformen und Winglets scheint ausgeschöpft zu sein. Die Anwendung zusätzlicher Triebwerke, Motoren usw. an der Spitze der Tragflächen hat sich nicht durchgesetzt. Obwohl der positive Effekt der Anwendung von Randwirbel-Turbinen als Energiequelle von Bordsystemen nachgewiesen ist, scheint auch diese Lösung nicht effektiv zu sein. Es hat zumindest bislang keine ernsthaften Versuche gegeben, eine Randwirbel-Turbine bei einem Serienflugzeug einzusetzen.

### AUFGABE DER ERFINDUNG

Der Erfindung liegt die Aufgabe zugrunde, eine strömungsdynamische Fläche mit den Merkmalen des Oberbegriffs des Patentanspruchs 1 aufzuzeigen, bei der mit vertretbarem Aufwand die Gleitzahl über das hinaus deutlich erhöht wird, was mit optimierten Profilen und Winglets an deren Spitze zu erreichen ist.

### LÖSUNG

Die Aufgabe der Erfindung wird durch eine strömungsdynamische Fläche mit den Merkmalen des unabhängigen Patentanspruchs 1 gelöst. Bevorzugte Ausführungsformen der strömungsdynamischen Fläche sind in den abhängigen Patentansprüchen 2 bis 12 definiert. Die Patentansprüche 13 bis 15 betreffen konkrete Einsätze der neuen strömungsdynamischen Fläche als Trag-, Leit- oder Ruderfläche bei Fluggeräten und Wasserfahrzeugen und als Rotorblatt bei verschiedenen offenen Rotoren.

### BESCHREIBUNG DER ERFINDUNG

Bei der neuen strömungsdynamischen Fläche treibt die von der durch die von der angeströmten aerodynamischen Fläche induzierte Strömung angetriebene Turbine einen vor der Hinterkante an der freien Spitze der Fläche angeordneten Propeller in zu dem Randwirbel entgegen gesetzter Drehrichtung an. Die mit der Turbine aus der induzierten Strömung gewonnene Rotationsenergie wird zur Unterdrückung des Randwirbels an den Propeller weitergegeben. Diese Energie ist proportional zur Intensität der von der angeströmten aerodynamischen Fläche induzierten Strömung, und die Vorrichtung aus Turbine, Propeller und zwischengeschaltetem Getriebe greift damit in jeder Fluglage autonom ein, d. h. nur soweit es notwendig ist. So wird bei Anwendung an den Tragflächen eines Fluggeräts in Flugphasen mit erhöhtem Auftrieb und entsprechend stärkerer von der angeströmten aerodynamischen Fläche induzierten Strömung, wie sie in der Startphase und im Landeanflug auftritt, wesentlich mehr Energie von der Turbine aufgenommen und auf den Propeller übertragen. Dies führt zu einer Intensivierung der Rotation des Propellers und zu einer entsprechend stärkeren Unterdrückung des Randwirbels. Beim Reiseflug mit hoher Geschwindigkeit, bei dem die Randwirbel nicht sehr intensiv sind, läuft die Vorrichtung hingegen nur unter einer sehr niedrigen Last. Wichtig für die vorliegenden Erfindung ist, dass die beschriebenen Maßnahem zur Reduzierung des Randwirbels direkt von der von der angeströmten aerodynamischen Fläche induzierten Strömung angetrieben werden und so in ihrem Umfang unmittelbar mit der Wirbelstärke des Randwirbels korreliert sind, der aus dieser von der angeströmten aerodynamischen Fläche induzierten Strömung resultiert. Durch eine passende Gestaltung der Turbine und des Propellers sowie des zwischengeschalteten Getriebes ist es möglich, die unerwünschten Auswirkungen des Randwirbels bei verschiedenen Flugbedingungen zu minimieren.

In einer Ausführungsform der neuen strömungsdynamischen Fläche wird die Turbine von dem von der freien Spitze ausgehenden Randwirbel angetrieben und treibt den Propeller, der entgegen ihrer Anströmung vor der strömungsdynamischen Fläche angeordnet ist, über ein die Drehrichtung der Turbine umkehrendes Getriebe an. Durch das dazwischen geschaltete Getriebe stellen die Turbine und der Propeller eine doppelstufige Anordnung mit direkter mechanischer Verbindung dar. Bei dieser Ausführungsform werden in Bezug auf die Anströmung der strömungsdynamischen Fläche stromauf und stromab der freien Spitze der Tragfläche Maßnahmen zur Wirbelunterdrückung eingeleitet. Dabei stellt die Anordnung aus der Turbine, dem Propeller und dem zwischengeschalteten Getriebe einen geschlossenen Regelkreis mit negativer Rückkopplung (so genannter Gegenkopplung) dar, wobei die Rotationsenergie des Randwirbels die Regelgröße ist. Diese Art der Rückkopplung hat bekanntermaßen immer eine schwächende Auswirkung auf die Regelgröße.

Es ist denkbar, das Getriebe zwischen der Turbine und dem Propeller zwischen der stufenweise schaltbaren oder auf einer variablen Übersetzung zu versehen. Aus Gründen der Einfachheit der erfindungsgemäßen Anordnung an der Spitze der strömungsdynamischen Fläche wird das Getriebe aber in der Regel eine feste Übersetzung aufweisen. Die Übersetzung des Getriebes zwischen der Turbine und dem Propeller kann eine Übersetzung von 1:-1 oder ein von 1:-1 abweichende Übersetzung aufweisen. Bei dieser Angabe bedeutet das Minuszeichen die Drehrichtungsumkehr über das Getriebe zwischen der Turbine und dem Propeller. Bei einer von 1:-1 abweichenden Übersetzung kann der Propeller sowohl eine höhere Drehzahl aufweisen als die Turbine als auch umgekehrt. Bevorzugt ist es jedoch, wenn der Propeller eine höhere Drehzahl aufweist.

Konkret kann das Getriebe ein drehfest mit der Turbine verbundenes Kegelzahnrad, ein drehfest mit dem Propeller verbundenes Kegelzahnrad und ein dazwischen geschaltetes, um eine ortsfeste Achse frei umlaufendes Kegelzahnrad aufweisen. Durch die Anzahl der Zähne der drehfest mit der Turbine und dem Propeller verbundenen Kegelzahnräder kann die Übersetzung des Getriebes festgelegt werden.

Insbesondere bei einem derartigen, einer Differenzialachse entsprechenden Getriebe können die Turbine und der Propeller koaxial gelagert sein, d. h. um eine gemeinsame Achse umlaufen.

Bei einem einfacheren Getriebe, bei dem ein drehfest mit der Turbine verbundenes Zahnrad direkt ein drehfest mit dem Propeller verbundenes Zahnrad kämmt, laufen die Turbine und das der Propeller um zueinander versetzte Achsen um.

In jedem Fall können die Turbine und der Propeller gemeinsam um eine Anstellachse der strömungsdynamischen Fläche gegenüber der strömungsdynamischen Fläche verschwenkbar sein, so dass ihre Achsen auch bei höheren Anstellwinkeln der strömungsdynamischen Fläche immer in Richtung der Anströmung der strömungsdynamischen Fläche verlaufen.

Statt einer gemeinsamen Verschwenkbarkeit der Turbine und des Propellers gegenüber der strömungsdynamischen Fläche kann die Turbine und/oder der Propeller auch einzeln um eine Anstellachse der strömungsdynamischen Fläche gegenüber der strömungsdynamischen Fläche verschwenkbar sein. Um diese Einzelanstellbarkeit zu realisieren, die zwischen der Turbine und dem Propeller auch synchronisiert sein kann, kann zwischen die Turbine und den Propeller mindestens ein Kardangelenk geschaltet sein.

Wie bereits angedeutet wurde, dienen weder die Schaufeln der Turbine noch des Propellers dazu, irgendwelchen Vorschub in der Hauptbewegungsrichtung der strömungsdynamischen Fläche aufzunehmen oder abzugeben. So können die Schaufeln der Turbine und des Propellers ohne Anstellung zur Anströmung der strömungsdynamischen Fläche verlaufen. In dieser Ausführungsform haben sie auch die geringste Auswirkung auf ihre eigene Anströmung in Richtung der Anströmung der strömungsdynamischen Fläche.

Grundsätzlich kann die Turbine oder der Rotor oder können sogar beide unmittelbar im Bereich der Spitze der strömungsdynamischen Fläche angeordnet sein. Vorzugsweise ist die Spitze der strömungsdynamischen Fläche selbst bei dieser Ausführungsform der aerodynamischen Fläche mit durch den Randwirbel angetriebener Turbine jedoch durch die Turbine und den Rotor aber unverändert, und die Turbine befindet sich im Nachlauf der Spitze, während sich der Propeller im Vorlauf der Spitze befindet.

Bei einer anderen Ausführungsform der neuen aerodynamischen Fläche ist die Turbine unmittelbar neben der freien Spitze der Fläche angeordnet und wird von einer Druckausgleichsströmung um die freie Spitze entgegen der Drehrichtung des Randwirbels angetrieben. Dabei tritt die Druckausgleichströmung zwischen der Drehachse der Turbine und der freien Spitze der aerodynamischen Fläche von der Druckseite auf die Saugseite der angeströmten aerodynamischen Fläche hindurch. Die Turbine hat so unmittelbar die der Drehrichtung des Randwirbels entgegen gesetzte Drehrichtung, wie sie für den Propeller benötigt wird. Ein Getriebe zwischen der Turbine und dem Propeller kann so zwar immer noch vorgesehen sein, um beispielsweise die Drehzahl der Turbine für den Antrieb des Propellers hoch zu setzen. Es ist aber auch eine drehfeste Verbindung der Turbine, d. h. die Vermeidung eines Getriebes möglich, wodurch jegliche Reibungsverluste in einem Getriebe entfallen. Damit steht nahezu die gesamte von der Turbine aufgenommene Energie für den Antrieb des Propellers zur Verfügung.

Es ist sogar möglich mit denselben Schaufeln sowohl die Turbine als auch den Propeller auszubilden. D. h., unterschiedliche Umfangsbereiche derselben Schaufelanordnung wirken als Turbine, um Energie aufzunehmen und als Propeller, um die aufgenommene Energie so in die Umströmung der aerodynamischen Fläche wiedereinzutragen, dass der Randwirbel abgemindert wird. Selbst wenn aber bei dieser Ausführungsform der aerodynamischen Fläche Teile der Turbine auch als Propeller wirken, kann auch ein zusätzlicher Propeller vor der Vorderkante der angeströmten Fläche angeordnet sein und direkt oder über ein Drehzahl-veränderndes Getriebe von der Turbine angetrieben werden.

Alle voranstehend im Zusammenhang mit der zuerst beschriebenen Ausführungsform der Erfindung erläuterten Ausgestaltungsmöglichkeiten stehen - soweit sie nicht im Widerspruch damit stehen, dass die Turbine unmittelbar neben der freien Spitze der Fläche angeordnet ist und von der Druckausgleichströmung um die freie Spitze der Fläche entgegen der Drehrichtung des Randwirbels angetrieben wird, - auch bei dieser zuletzt beschriebenen Ausführungsform der vorliegenden Erfindung zur Verfügung. Allerdings fällt die Drehachse der Turbine bei der zuletzt beschriebenen Ausführungsform der vorliegenden Erfindung in der Regel nicht mit der Wirbelachse des Randwirbels zusammen, sondern ist gegenüber dieser nach außen parallel versetzt.

Die vorliegende Erfindung kann in allen ihren Ausführungsformen insbesondere bei den Tragflächen eines Fluggeräts umgesetzt werden, wobei hier unter den Begriff Fluggerät neben Verkehrsflugzeugen mit Tragflächen relativ großer Streckung auch Fluggeräte mit Tragflächen kleiner Streckung, wie z. B. Kampfflugzeuge, UAV bzw. UCAVs oder Drohnen, fallen, bei denen eine Erhöhung der Gleitzahl eine erhebliche Steigerung der Leistungsfähigkeit bedeutet. In der zivilen Luftfahrt ist der mit der Erfindung erreichte Effekt neben der Reduzierung des induzierten Widerstands eine Minimierung des Mindestabstands zwischen zwei Flugzeugen in der Start- oder Landephase.

Zu den Tragflächen bei denen die Erfindung eingesetzt werden kann zählen auch die Rotorblätter von Rotoren von solchen Drehflüglern, bei denen die Rotoren passiv in Rotation versetzt werden, (so genannten Tragschraubern oder Gyrocoptern) und die Tragflächen von Tragflächenbooten.

Die Erfindung kann weiterhin bei Leit- und Ruderflächen von Fluggeräten und Wasserfahrzeugen sowie jeglichen Antriebspropellern und Ventilatoren mit offenen Rotoren eingesetzt werden. Spezielle Einsatzgebiete der Erfindung sind die Rotorblätter von Rotoren von Hubschraubern und Windkraftanlagen.

Auch bei an sich ortsfesten strömungsdynamischen Flächen, wie beispielsweise Stabilisatoren an Bohrinseln kann die Erfindung zum Einsatz kommen.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Die Erfindung wird im Folgenden unter Bezugnahme auf die beigefügten Zeichnungen anhand von Ausführungsbeispielen näher erläutert und beschrieben.
- **Fig. 1**: zeigt eine perspektivische Seitenansicht eines Flugzeugs mit zwei erfindungsgemäßen Tragflächen in einer ersten Ausführungsform.
- **Fig. 2**: zeigt die in Fig. 1 an den Spitzen beider Tragflächen vorgesehene Anordnung einer Turbine und eines Propellers mit zwischengeschaltetem Getriebe.

- **Fig. 3**: zeigt ein Beispiel für das Getriebe gemäß Fig. 2.
- **Fig. 4**: zeigt ein weiteres Beispiel für das Getriebe Zwischen der Turbine und dem Propeller.
- **Fig. 5**: skizziert eine Verschwenkbarkeit der Anordnung gemäß Fig. 2 gegenüber der Tragfläche, an deren Spitze sie angeordnet ist.
- **Fig. 6**: skizziert eine andere Art und Weise der Anstellung der Turbine und des Propellers der Anordnung gemäß Fig. 2 zu der Tragfläche.
- **Fig. 7**: zeigt eine perspektivische Seitenansicht eines Flugzeugs mit zwei erfindungsgemäßen Tragflächen in einer zweiten Ausführungsform, wobei die freie Spitze der vorne liegende Tragfläche teilweise weggebrochen ist.
- **Fig. 8**: zeigt einen Querschnitt längs einer in Fig. 7 eingetragenen Schnittlinie A-A durch die freie Spitze der Tragflächen für zwei Ausführungsvarianten dieser Ausführungsform der Erfindung.
- **Fig. 9**: zeigt eine als Turbine und Propeller vorgesehene Schaufelanordnung, wie sie an den freien Spitzen der Tragflächen gemäß Fig. 7 vorgesehen ist; und
- **Fig. 10**: zeigt eine Fig. 9 entsprechende Anordnung mit zusätzlich stromauf der Anströmung angeordnetem Propeller.

### FIGURENBESCHREIBUNG

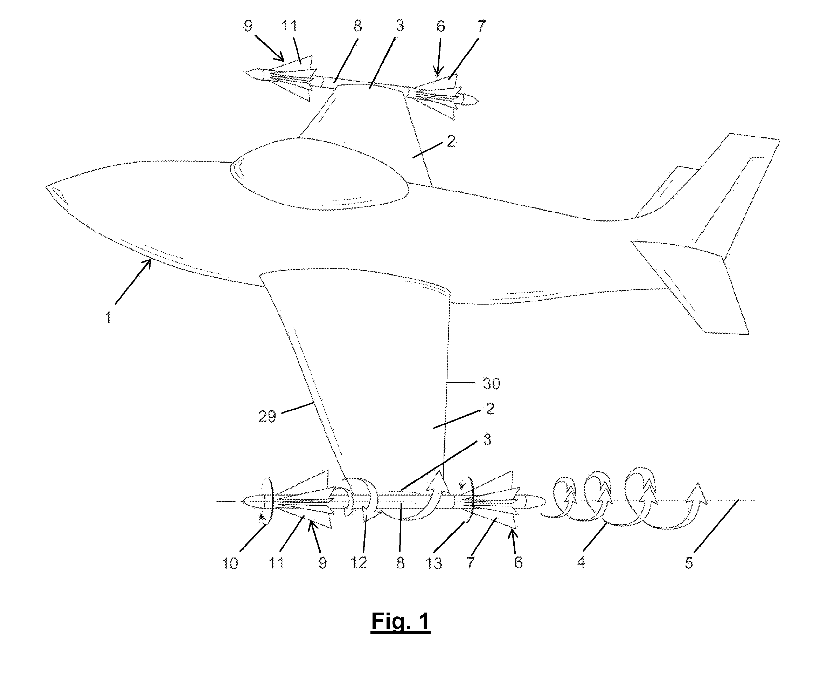

**Fig. 1** skizziert ein Flugzeug 1 mit strömungsdynamischen Flächen 2 in Form von zwei Tragflächen. An der Spitze 3 der Tragflächen 2 treten Randwirbel auf, von denen hier nur der Randwirbel 4 an der Spitze 3 der vorderen Tragfläche 2 zeichnerisch dargestellt ist. Die Randwirbel 4 resultieren aus einer Umströmung der Spitzen 3 von der Unterseite, d. h. Überdruckseite auf die Oberseite, d. h. Unterdruckseite der Tragflächen 2. Die Wirbelachse 5 der Randwirbel 4 verläuft in der Richtung der Anströmung 23 Tragflächen 2, was hier die zu der Hauptbewegungsrichtung der Tragflächen 2 entgegen gesetzte Richtung ist. Im Nachlauf jeder Spitze 3 ist eine Turbine 6 vorgesehen, die durch den jeweiligen Randwirbel 4 in Rotation versetzt wird. Die Turbinenschaufeln 7 der Turbinen 6 sind zu der Wirbelachse 5 nicht angestellt, so dass die antreibende Anströmung der Turbinen 6 ausschließlich aus der Rotation der Randwirbel 4 resultiert. Über ein Getriebe 8 sind die Turbinen 6 jeweils mit einem im Vorlauf der jeweiligen Spitze 3 der Tragfläche 2 liegenden Propeller 9 verbunden, wobei die Turbinen 7 die Propeller 9 in zu dem jeweiligen Randwirbel 4 entgegen gesetzter Drehrichtung antreiben, was bei dem vorderen Propeller in Fig. 1 durch einen Drehpfeil 10 visualisiert ist. Der Propeller 9, dessen Propellerschaufeln 11 ebenfalls zu der Achse 5 nicht angestellt sind, verursacht eine umlaufende Luftströmung 12 mit entgegen gesetzter Drehrichtung zu dem Randwirbel 4 um die Wirbelachse 5, wodurch der Randwirbel 4 effektiv abgemindert wird. Hierdurch sinkt der durch den Randwirbel 4 induzierte Widerstand und steigt die Gleitzahl des Flugzeugs 1. Bei diesem Konzept wird nominell nur die Rotationskomponente des Randwirbels 4 zum Antrieb der Turbine 6 verwendet und entsprechend durch das Rotieren des Propellers nur eine Rotationskomponente der umlaufenden Luftströmung 12 erzeugt. Auf diese Weise wird der zusätzliche Widerstand der Turbine und des Propellers minimal gehalten. Der Propeller ist nicht auf Schub, sondern auf eine möglichst effektive Erzeugung der genannten Rotationskomponente ausgelegt. Die Form und die Größe der Turbinenschaufeln 7 können sich von der Form und der Größe der Propellerschaufeln unterscheiden. Ebenso können die Rotationsgeschwindigkeiten der Turbine und des Propellers, abgesehen von der unterschiedlichen Drehrichtung, ebenfalls unterschiedlich sein. Bei geeigneter Abstimmung der Turbine 6, des Getriebes 8 und des Propellers 9 tritt diese Vorrichtung in Abhängigkeit von der Wirbelstärke der Randwirbel 4 automatisch in Aktion und bedarf keiner zusätzlichen Ansteuerung.

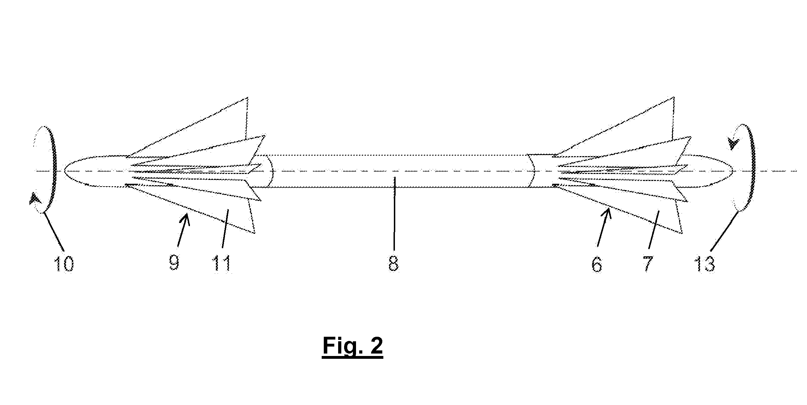

**Fig. 2** zeigt die Turbine 6, das Getriebe 8 und den Propeller 9 in separater Darstellung, wobei hier die unterschiedlichen Drehrichtungen der Turbine 6 und des Propellers 9 durch gegenläufige Drehpfeile 13 und 10 visualisiert sind.

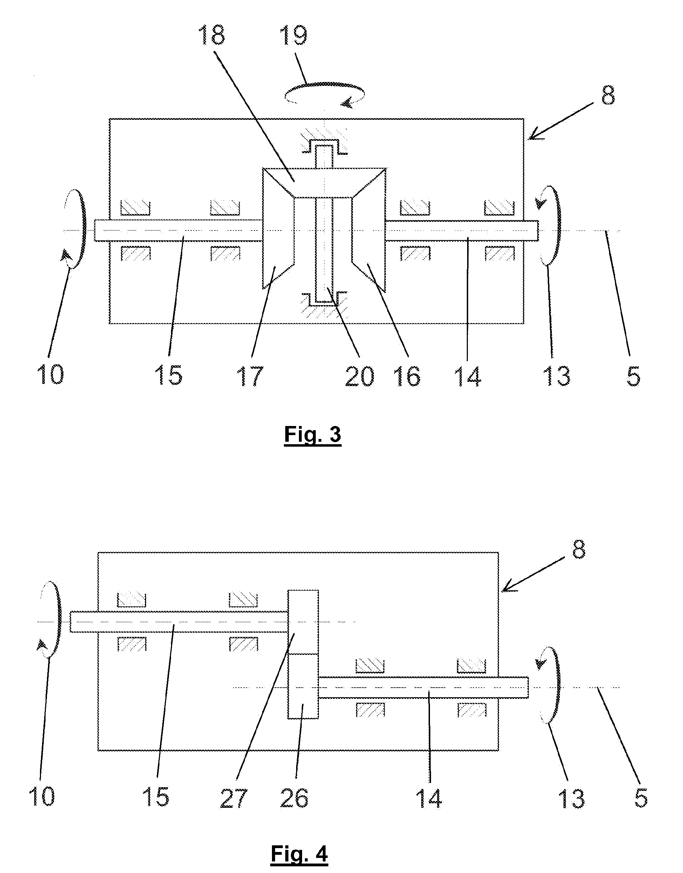

**Fig. 3** skizziert eine mögliche Ausführungsform des Getriebes 8 zwischen einer Welle 14 der Turbine und einer Welle 15 des Propellers. Auf der Welle 14 ist drehfest ein Kegelzahnrad 16 angeordnet, ebenso ist auf der Welle 15 drehfest ein Kegelzahnrad 17 angeordnet. Beide Kegelzahnräder 16 und 17 werden durch ein frei drehbar gelagertes Kegelzahnrad 18 gekämmt, das in Richtung eines Drehpfeils 19 um die ortsfeste Drehachse 20 umläuft. Dieses Kegelzahnrad 18 bewirkt die Drehrichtungsumkehr zwischen der Welle 14 und der Welle 15.

**Fig. 4** skizziert eine andere Ausführungsform des Getriebes 8 zwischen der Welle 14 der Turbine und der Welle 15 des Propellers. Auf der Welle 14 ist drehfest ein Zahnrad 26 angeordnet, das direkt ein drehfest auf der Welle 15 angeordnetes Zahnrad 27 kämmt. Auch so ergibt sich die gewünschte Drehrichtungsumkehr zwischen der Welle 14 und der Welle 15, die hier um den mittleren Durchmesser der beiden Zahnräder 26 und 27 parallel zueinander versetzt ausgerichtet sind.

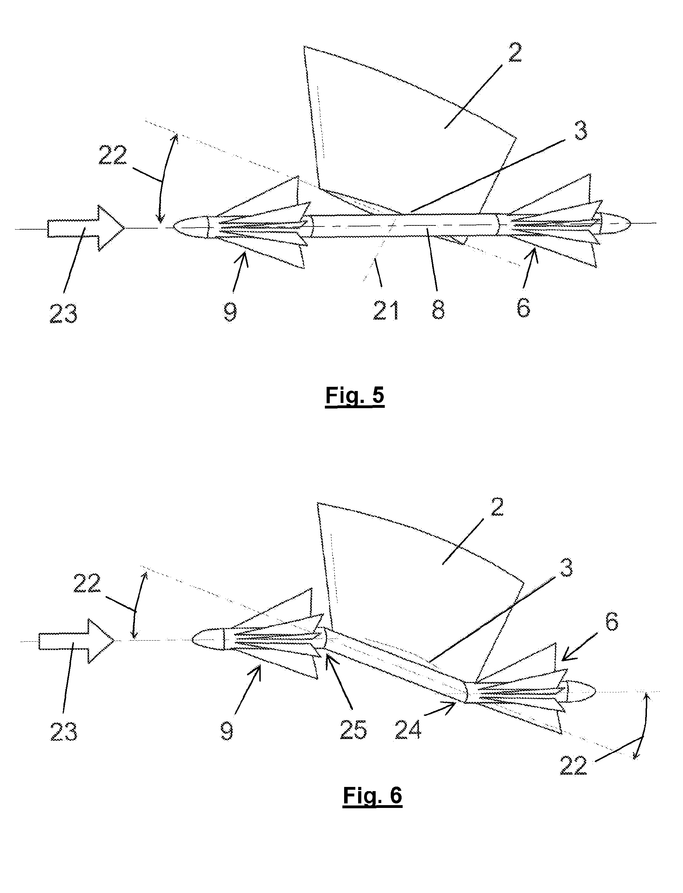

**Fig. 5** skizziert eine Verschwenkbarkeit der Anordnung aus Turbine 6, Getriebe 8 und Propeller 9 gegenüber der Spitze 3 der Tragfläche 2 um eine Anstellachse 21. Hierdurch kann ein Anstellwinkel 22 der Tragfläche 2 gegenüber seiner Anströmung 23 kompensiert werden.

**Fig. 6** skizziert eine andere Möglichkeit der Anpassung der Anordnung gemäß Fig. 1 und 2 an einen stärkeren Anstellwinkel 22 der Tragfläche 2 zu seiner Anströmung 23. Hier sind an der Tragflächenhinterkante und -vorderkante Drehgelenke für die Turbine 6 und den Propeller 9 ausgebildet, durch die hindurch die Wellen 14 und 15 gemäß Fig. 3 mit Kardangelenken verlaufen. Auf diese Weise können die Turbine 6 und der Propeller 9 getrennt voneinander zu der Tragfläche 2 angestellt werden, um den Anstellwinkel 22 der Tragfläche 2 gegenüber ihrer Anströmung 23 zu kompensieren.

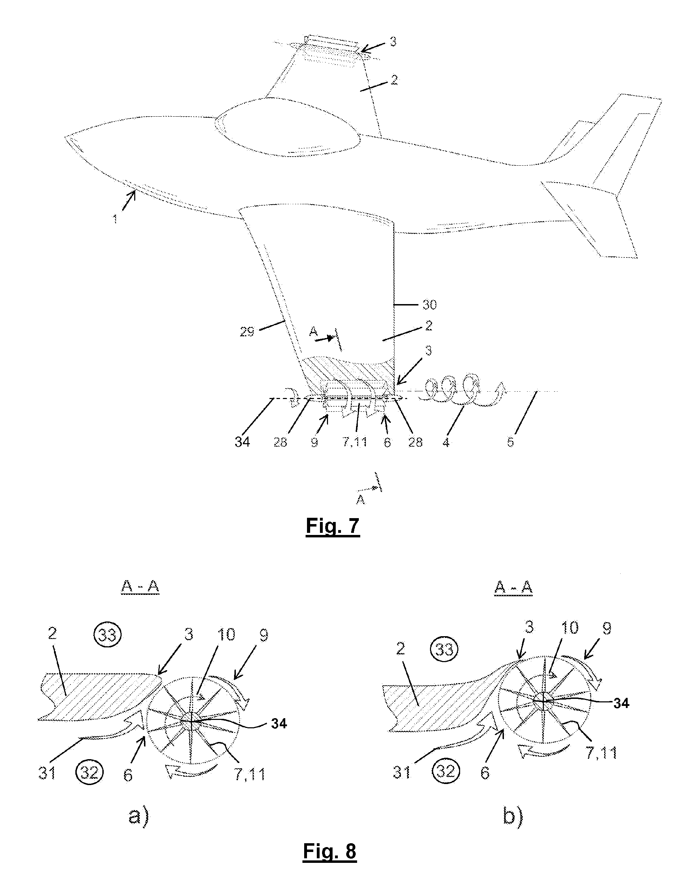

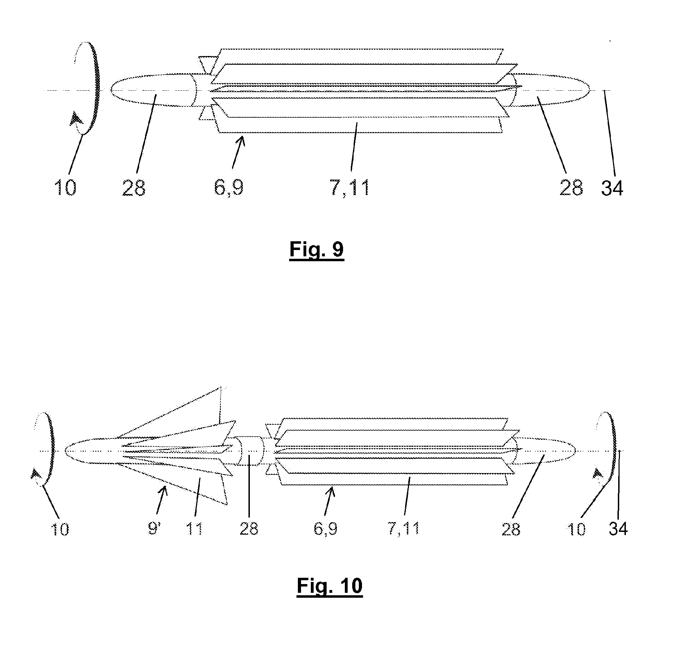

Bei dem in **Fig. 7** skizzierten Flugzeug 1 ist an der freien Spitze 3 jeder Tragfläche 2 eine in Fig. 9 separat dargestellte Anordnung aus Schaufeln 7, 11, die zugleich als Turbine 6 und als Propeller 9 dient, um eine parallel zu der Wirbelachse 5 des Randwirbels 4 nach außen versetzte Drehachse 34 verdrehbar gelagert. Dabei sind Drehlager 28 für die Anordnung aus den Schaufeln 7, 11 im Bereich der Vorderkante 29 und der Hinterkante 30 der Tragfläche 2 vorgesehen.

Die Anordnung der Schaufeln 7, 11 wird durch eine Druckausgleichsströmung 31 angeströmt und in Richtung des Drehpfeils 10 angetrieben, die zwischen der Druckseite 32 und der Saugseite 33 der Tragfläche 2 auftritt. Dabei tritt die Druckausgleichströmung 31 zwischen der Drehachse 34 und der freien Spitze 3 der Tragfläche 2 hindurch, wie aus den Querschnitten gemäß **Fig. 8** ersichtlich ist. Dabei unterscheiden sich die in Fig. 8 a) und b) dargestellten Varianten dieser Ausführungsform der Erfindung hinsichtlich der relativen Höhe der Drehachse 34, um die die Anordnung der Schaufeln 7, 11 umläuft, zu dem freien Ende 3 sowie hinsichtlich der Ausgestaltung des freien Endes 3 der Tragfläche 2. Bei beiden Varianten wirkt der Bereich der Anordnung der Schaufeln 7, 11 zwischen der Drehachse 34 und der freien Spitze 3 als Turbine 6, während der äußere Bereich jenseits der Drehachse 34 als der den Randwirbel 4 abmindernde Propeller 9 wirkt.

In **Fig. 9** ist die Anordnung der Schaufeln 7, 11, die sowohl als Turbine 6 als auch als Propeller 9 dient, und deren Drehlager 28 separat dargestellt.

**Fig. 10** zeigt eine Variante der Ausführungsform gemäß den Figuren 7 und 9, bei der vor dem vorderen Drehlager 28 ein weiterer Propeller 9' angeordnet ist, der entsprechend in Fig. 7 vor der Vorderkante 29 und damit entgegen der Richtung der Anströmung der Tragfläche 2 vor der Tragfläche 2 läge. Dabei kann der weitere Propeller 9' drehfest mit der Turbine 6 und dem anderen Propeller 9 verbunden sein oder über ein beispielsweise die Drehzahl der Turbine 6 bzw. des anderen Propellers 9 hochsetzendes aber deren Drehrichtung beibehaltendes Getriebe.

Auch bei der Ausführungsform der Erfindung gemäß den Fig. 7 bis 10 wird die Turbine von einer Strömung angetrieben, die von der angeströmten Tragfläche 2 induziert wird. Während diese Strömung bei der Ausführungsform gemäß den Fig. 1 ff. der Randwirbel 4 ist, handelt es sich hier um die Druckausgleichströmung 31 gemäß Fig. 8. Übereinstimmend bei beiden Ausführungsformen gemäß Fig. 1 ff und Fig. 7 ff treibt die Turbine 6, sobald sie mit diesem nicht baugleich ist, den Propeller 9 entgegen der Drehrichtung des Randwirbels 4 an und reduziert so dem Randwirbel 4 bzw. die damit verbundenen negativen Effekte auf den Auftrieb und den induzierten Widerstand der Tragfläche 2.

### BEZUGSZEICHENLISTE

- 1: Flugzeug
- 2: Strömungsdynamische Fläche/Tragfläge
- 3: Spitze
- 4: Randwirbel
- 5: Wirbelachse
- 6: Turbine
- 7: Turbinenschaufel
- 8: Getriebe
- 9: Propeller
- 10: Drehpfeil
- 11: Propellerschaufel
- 12: Luftströmung
- 13: Drehpfeil
- 14: Welle
- 15: Welle
- 16: Kegelzahnrad
- 17: Kegelzahnrad
- 18: Kegelzahnrad
- 19: Drehpfeil
- 20: Achse
- 21: Anstellachse
- 22: Anstellwinkel
- 23: Anströmung
- 24: Drehgelenk
- 25: Drehgelenk
- 26: Zahnrad
- 27: Zahnrad
- 28: Drehlager
- 29: Vorderkante
- 27: Hinterkante

- 31: Druckausgleichsströmung
- 32: Druckseite
- 33: Saugseite
- 34: Drehachse

## Patentansprüche

1. Strömungsdynamische Fläche (2) mit einer einer Anströmung (23) der Fläche (2) zugewandten Vorderkante (29), einer der Anströmung (23) abgewandten Hinterkante (30) und einer freien Spitze (3) sowie einer an der freien Spitze (3) angeordneten und von einem von der angeströmten Fläche (2) induzierten Strömung angetriebenen Turbine (6), wobei von der freien Spitze (3) der angeströmten Fläche (2) ein Randwirbel (4) ausgeht, **dadurch gekennzeichnet, dass** die Turbine (6) einen vor deren Hinterkante (30) an der freien Spitze (3) angeordneten Propeller (9) in zu dem Randwirbel (4) entgegen gesetzter Drehrichtung (10) antreibt.

2. Strömungsdynamische Fläche nach Anspruch 1, **dadurch gekennzeichnet, dass** die Turbine (6) den Propeller (9) um die Wirbelachse (5) des Randwirbels (4) antreibt.

3. Strömungsdynamische Fläche nach Anspruch 1 oder 2, **dadurch gekennzeichnet, dass** die Turbine (6) und der Propeller (9) koaxial gelagert sind.

4. Strömungsdynamische Fläche nach einem der Ansprüche 1 bis 3, **dadurch gekennzeichnet, dass** Schaufeln (7) der Turbine (6) und/oder Schaufeln (11) des Propellers (9) zur Anströmung (23) der strömungsdynamischen Fläche (2) nicht angestellt sind.

5. Strömungsdynamische Fläche nach einem der Ansprüche 1 bis 4, **dadurch gekennzeichnet, dass** Propeller (9) im Vorlauf der Spitze (3) angeordnet ist.

6. Strömungsdynamische Fläche nach einem der Ansprüche 1 bis 5, **dadurch gekennzeichnet, dass** die Turbine (6) und/oder der Propeller (9) einzeln oder gemeinsam um eine Anstellachse (21) der strömungsdynamischen Fläche (2) gegenüber dieser verschwenkbar sind/ist.

7. Strömungsdynamische Fläche nach einem der Ansprüche 1 bis 6, **dadurch gekennzeichnet, dass** die Turbine (6) den Propeller (9) über ein Getriebe (8) antreibt.

8. Strömungsdynamische Fläche nach Anspruch 7, **dadurch gekennzeichnet, dass** das Getriebe (8) die Drehzahl der Turbine (6) in eine größere Drehzahl des Propellers (9) übersetzt.

9. Strömungsdynamische Fläche nach Anspruch 7 oder 8, **dadurch gekennzeichnet, dass** die Turbine (6) im Nachlauf der Spitze (3) hinter der Hinterkante (30) angeordnet ist und das Getriebe (8) die Drehrichtung der Turbine (6) umkehrt.

10. Strömungsdynamische Fläche nach einem der Ansprüche 1 bis 8, **dadurch gekennzeichnet, dass** die Turbine (6) unmittelbar neben der freien Spitze (3) angeordnet ist und von einer Druckausgleichsströmung um die freien Spitze (3) entgegen der Drehrichtung des Randwirbels (4) angetrieben wird.

11. Strömungsdynamische Fläche nach Anspruch 10, dieser nicht rückbezogen auf Anspruch 7 oder 8, **dadurch gekennzeichnet, dass** die Turbine (6) und der Propeller (9) drehfest miteinander verbunden sind.

12. Strömungsdynamische Fläche nach Anspruch 11, **dadurch gekennzeichnet, dass** dieselben Schaufeln (7, 11) die Turbine (6) und den Propeller (9) ausbilden.

13. Strömungsdynamische Fläche nach einem der Ansprüche 10 bis 112, **dadurch gekennzeichnet, dass** die Turbine (6) um eine Drehachse (34) umläuft, die gegenüber der Wirbelachse (5) des Randwirbels (4) nach außen versetzt ist.

14. Luft- oder Wasserfahrzeug mit einer Trag-, Leit- oder Ruderfläche nach einem der Ansprüche 1 bis 12.

15. Offenen Rotor für einen Antriebspropeller, einen Ventilator, einen Hubschrauber oder eine Windkraftanlage, der mindestens ein Rotorblatt nach einem der Ansprüche 1 bis 12 aufweist.
